# EUROPEAN PATENT SPECIFICATION

(11) **EP 3 542 073 B1**
(45) Date of publication and mention of the grant of the patent: **25.03.2020**
(21) Application number: 17859354.7
(22) Date of filing: 05.07.2017
(51) Int. Cl.: F16B 5/02, F17C 1/00, F17C 3/08

(54) **ANNULAR SPACE SEPARATING MECHANISM FOR CRYOGENIC TANKS**
RINGFÖRMIGER RAUMTRENNMECHANISMUS FÜR KRYOGENE TANKS
MÉCANISME DE SÉPARATION D'ESPACE ANNULAIRE POUR RÉSERVOIRS CRYOGÉNIQUES

(43) Date of publication of application: 25.09.2019
(73) Proprietor: ARITAS KRIYOJENIK ENDÜSTRI SANAYI VE TICARET ANONIM SIRKETI, 34846 Maltepe/Istanbul (TR)
(72) Inventor: ÖZ, Mustafa, Ümraniye/Istanbul (TR)
(74) Representative: Yamankaradeniz, Kemal
(86) International application number: PCT/TR2017/050306
(87) International publication number: WO 2019/009826

(56) References cited:
- EP-A1- 2 990 715
- EP-A1- 3 012 508
- CN-Y- 201 177 156
- JP-A- 2014 074 452

## Description

### Technical Field

The invention relates to an annular space separating mechanism for cryogenic tanks.

The invention specifically relates to an annular space separating mechanism (1) which enables support to the inner tank of cryogenic tanks, against transport loads arising from transportation systems such as sea route, land route and train during the transportation at horizontal position, and the support mechanism (1) separates after the tank that is transported to the work field is positioned vertically and inhibits the occurring of a thermal bridge between the inner tank and outer tank,

### The Prior Art

At the present day, container and equipment for which the internal pressure is greater than 0.5 bar are called pressured containers. Pressured containers in which the air is pressured or in which steam is produced, or in which compressed air, gas etc. are stored; are classified as gas tubes, air tanks, LPG tanks, compressors, pipelines, industrial gas tanks, autoclaves, cooling units, hydrophores and Cryogenic Tanks.

Cryogeny is a term in physics used for production and processes performed in very low temperatures. Applications of industrial aims which are performed below 120K temperature may be included into Cryogenic applications. Cryogenic Tanks, are produced for the purposes of transporting and storing gases in which liquid is high such as liquidized natural gas (LNG), liquidized nitrogen (LIN), liquidized argon (LAR), and liquidized oxygen (LOX). Cryogenic Tanks are designed to maintain the minimum -196ºC temperature of the gas they contain. Cryogenic Tanks are composed of two tanks that are interlaced and called outer tank and inner tank. In the said tanks, any kind of support system which are used between the two paries, form a thermal bridge and results in the heating of the tank and consequently loss of product. Therefore, support systems which has the lowest and narrowest cross section area or support systems with isolation materials shall be used.

Cryogenic Tanks which operate vertically, have to be transported horizontally due to their heights. During this transportation, transport loads resulting from transportation systems such as sea route, land route and trains causes the inner tank to be dispersed inside the outer tank and cause the moments to be created due to additional forces. Therefore, inner tank shall be supported to the outer tank in a very well manner.

Since the Cryogenic Tanks that will operate in vertical position shall be transported in horizontal position due to their height, the calculations are made depending on their carrying load in the vertical position. Supports, that are going to connect the inner tank and outer tank, should be located to the place that will be the top of the tank. These supports are beneficial only during the transportation and are not required during the operation.

In the present applications, permanent supports are placed between the two paries of the inner tank and outer tank within the Cryogenic Tanks. Placing supports only for the transport loads to these tanks which shall be transported only once in their use lifetime affects the heat efficiency of the tank in work field negatively.

Current literature search of the issue in present art revealed the following compositions.

The document CN201177156 Y discloses an inner supporting structure for a liquefied natural gas tank.

Chinese utility model application with publication number CN203757363 (U) is related to the 'A composite heat isolation support part of the transportable Cryogenic liquid storage tank'. Utility model related to a composite heat isolation support part and especially is related to a heat isolation support part of a moving Cryogenic liquid storage tank aiming to solve the high dissolution and low reliability problems of an existing composite heat isolation support part. However, the said utility model, cannot provide a solution for the desired efficiency for the fact that it provides a permanent support system including isolation materials.

US patent application with issue number US5651473 (A) relates to 'A support system for Cryogenic containers'. The invention has a scattered outer sheath which is surrounded by an inner tank in order to create an isolated space in between. Inner tank is appropriately close to the outer jacket, therefore the isolation division is mostly uniform and the capacity of inner tank is increased. An isolated support arrangement extending to the inner tank creates the communication of the outer part of the tank with inner tank for pipe, pressure signs and alike. Support arrangement provides an isolated path longitudinally without reducing the capacity of the tank and keeps it same as the prior technical devices. However, the said patent cannot provide the solution because it provides a fixed support system.

As a result, due to the problems stated above and the insufficiency of the existing solutions regarding the issue, an improvement is required.

### Aim of the Invention

The invention related to a separating support system for Cryogenic Tanks, which fulfills the abovementioned needs, eliminates all existing disadvantages and provides some additional advantages.

Prior aim of the invention is to obtain a support mechanism for Cryogenic tanks, that shall be operated in the vertical position, and that shall support the inner tank against the transportation loads due to transportation systems such as sea route, land route and train, during the horizontal transportation.

The aim of the invention is to inhibit a thermal bridge to be formed between inner tank and outer tank due to an annular space separating mechanism after the Cryogenic tank, which is transported into the workfield in a horizontal position, and is located in a vertical position.

For the abovementioned aims to be realized, the invention is; an annular space separating mechanism (1) which enables support to the inner tank of cryogenic tanks, against transport loads arising from transportation systems such as sea route, land route and train during the transportation at horizontal position, and the support mechanism (1) separates after the tank that is transported to the work field is positioned vertically and inhibits the occurring of a thermal bridge between the inner tank and outer tank, and it is characterized in that; it comprises;
- an outer tank dabbling which enables the load to be distributed to outer tank and inhibits the tank vacuum to be leaked,
- an inner tank dabbling that enables the load to be distributed to the inner tank,
- a cover plate which holds the vacuum and contacts the inner tank sheet metal during transportation,
- at least two pieces of non-slippery surfaced part (PTFE) which are contacted above and below the said cover plate and reduce the friction constant under load,
- at least one junction member which enables the said non-slippery surfaced parts to be connected to the said cover plate,
- a threaded rod which turns the turning movement that is applied for separating the said support mechanism from the tank into a bidirectional axial movement,
- a nut that enables the vertical movement of said threaded rod,
- a yellow brass bearing, which enables the up and down movement of the said bearing member by turning inside the bearing member when the said threaded rod turns,
- a bearing member which is bearing the said yellow brass bearing and which contacts to the said cover plate,
- connection screw that enables the said yellow brass bearing to be connected to the said threaded rod,
- a shim that enables the said connection screw to distribute its loads,
- an expansion joint which enables the compression movement when the said threaded rod turns,
- lower sleeve which enables the said expansion joint to be connected to the said cover plate,
- an upper sleeve which enables the said expansion joint to be connected to the said outer tank dabbling,
- a protective sleeve which inhibits the isolation products to go in between of the said expansion joint spirals,
- at least two plates which enable the said expansion joint to be connected to the said sleeves,
- a stopper which is located on the threaded rod and inhibits the threaded rod from turning too far when contacted to the outer tank dabbling and inhibits the said expansion joint be damaged with extreme compression,

The structural and characteristic features and all advantages of the invention shall be clearly understood by the figures provided below and detailed description written with references to these figures, therefore the evaluation should be made by taking these figures and detailed description into account.

### Figures for Better Understanding of the Invention

Figure-1, shows an outer view of the annular space separating mechanism of the invention.
Figure-2, shows the components of the annular space separating mechanism of the invention.
Figure-3, shows the exploded view of the annular space separating mechanism of the invention.
Figure-4, shows the cross section view of the annular space separating mechanism of the invention.
Figure-5, shows the downward movement of the support mechanism by the threaded rod turning in A direction.
Figure-6, shows the upward movement of the support mechanism by the threaded rod turning in B direction.

### Explanation of the Part References

- 1: Support mechanism
10 Outer tank dabbling
20 Inner tank dabbling
30 Plate
31 Connection screw
40 Stopper
50 Threaded rod (stud)
60 Lower sleeve
70 Protective sleeve
80 Expansion joint (blower)
90 Upper sleeve
100 Shim
110 Yellow brass bearing
120 Bearing member
123 Nut
130 Non-slippery surfaced part
131 Junction member
140 Cover plate
A. direction A
B. direction B

### Detailed Description of the invention

In this detailed description, an annular space separating mechanism (1) for Cryogenic Tanks and its preferred components are explained merely for a better understanding of the subject and in a non-limiting manner.

The invention is an annular space separating mechanism (1) which enables support to the inner tank of cryogenic tanks, against transport loads arising from transportation systems such as sea route, land route and train during the transportation at horizontal position, and the support mechanism (1) separates after the tank that is transported to the work field is positioned vertically and inhibits the occurring of a thermal bridge between the inner tank and outer tank.

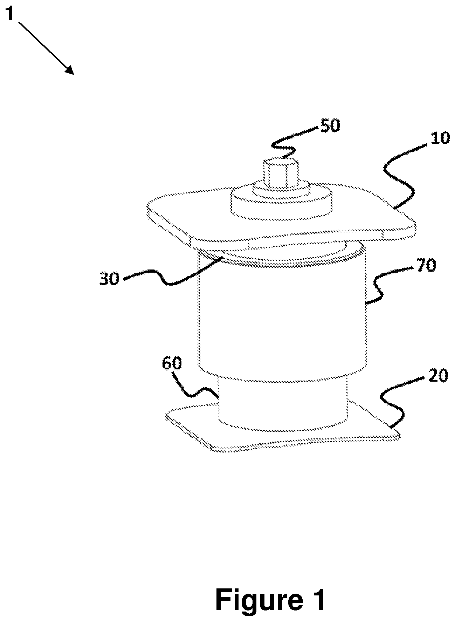

An annular space separating mechanism (1) of the invention, of which the outer view is depicted in Figure 1, is a support system which is active when the tank is being horizontally transported and becomes inactive when the tank is positioned vertically.

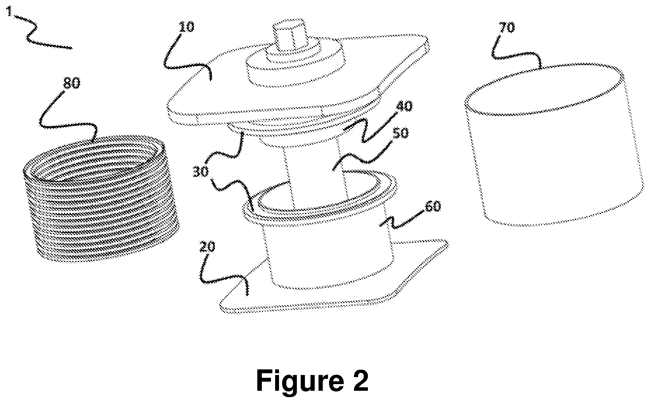

The most important parts of the annular space separating mechanism (1) of the invention, of which the components are depicted in Figure 2, are expansion joint (80), stopper (40) and threaded rod (50).

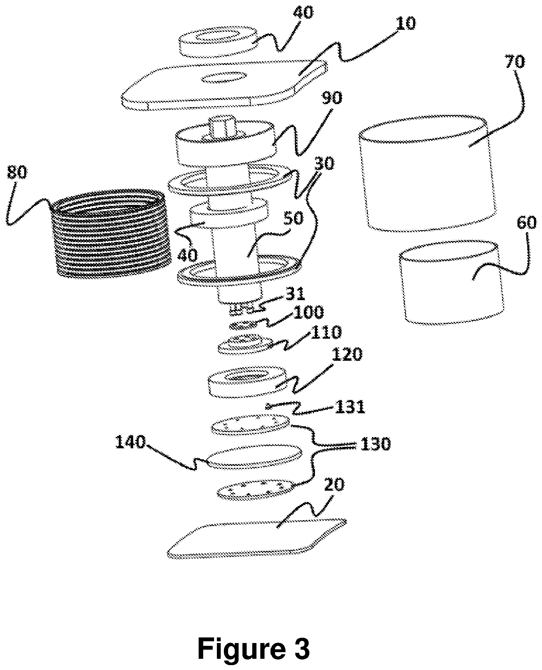

An annular space separating mechanism (1) of the invention, of which the exploded view is shown in Figure 3 comprises an outer tank dabbling (10) that enables the load to be distributed to the outer tank and disables the vacuum of tank to leaked; an inner tank dabbling (20) that enables the load to be distributed to the inner tank; a cover plate (140) which holds the vacuum and contacts the inner tank sheet metal during the transportation; at least two pieces of non-slippery surfaced part (130) which are contacted above and below the said cover plate (140) and reduces the friction constant under load and are preferably PTFE coated; at least one junction member (131) which enables the said non-slippery surfaced parts (130) to be connected to the said cover plate (140); a threaded rod (50) which turns the turning movement that is applied for separating the said support mechanism (1) from the tank into a bidirectional axial movement; a nut (123) which enables the vertical movement of the said threaded rod (50); a Yellow brass bearing (110) preferably made of copper alloy material, which enables the upward movement of the system by contacting the bearing member (120) or the downward movement of the system by contacting the said non-slippery surfaced part (130) when the said threaded rod (50) turns; a bearing member (120), which is preferably made of stainless steel, which is bearing the said yellow brass bearing (110) and which contacts to the said cover plate (140); at least one connection screw (31) which enables the said yellow brass bearing (110) to be connected to the said threaded rod (50); a shim (100) that enables the said connection screw (31) to distribute its loads; an expansion joint (80), which is preferably made of flexible steel and which enables the compression movement when the said threaded rod (50) turns; a lower sleeve (60) which enables the said expansion joint (80) to be connected to the said cover plate (140); a upper sleeve (90) which enables the said expansion joint (80) to be connected to the said outer tank dabbling (10); a protective sleeve (70) which inhibits the isolation products to go in between of the said expansion joint (80) spirals; at least two plates (30) which enables the said expansion joint (80) to be connected to the said sleeves (60,70,90); a stopper (40) which inhibits the threaded rod (50) from turning too far and inhibits the said expansion joint (80) be damaged with extreme compression.

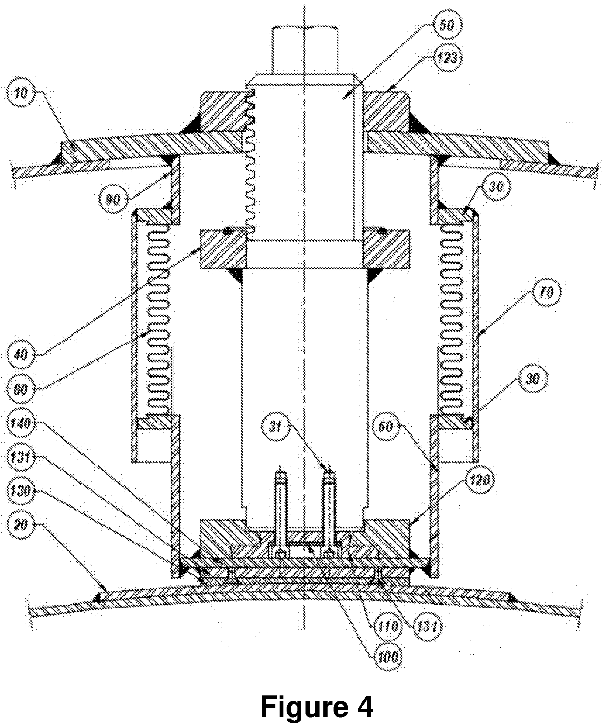

The operation principle of the annular space separating mechanism (1) of the invention, of which the cross section view is depicted in Figure 4; is as follows.

Before transportation, threaded rod (50) is turned in a manner that it contacts inner tank dabbling (20). Non-slippery surfaced part (130) contacts the inner tank dabbling (20) and therefore friction constant is reduced to the minimum. After the tank is erected, threaded rod (50) starts turning, yellow brass bearing (110) which is placed within the bearing member (120) is contacted to the threaded rod (50) by connection screws (31) and shim (100) and starts to turn with the threaded rod (50). Bearing member (120), cover plate (140), lower sleeve (60) are connected by welding. Therefore, the movement of the threaded rod (50) is forwarded to expansion joint (80) and the contact between non-slippery surfaced part (130) and inner tank dabbling (20) starts to be interrupted with the compression movement. The compression movement of the Expansion joint (80) may continue until the, stopper (40) contacts the outer tank dabbling (10). In the invention's annular space separating mechanism (1), the fact that all the parts between the cover plate (140) and outer tank dabbling (10) are contacted by welding enables the tank remain under vacuum.

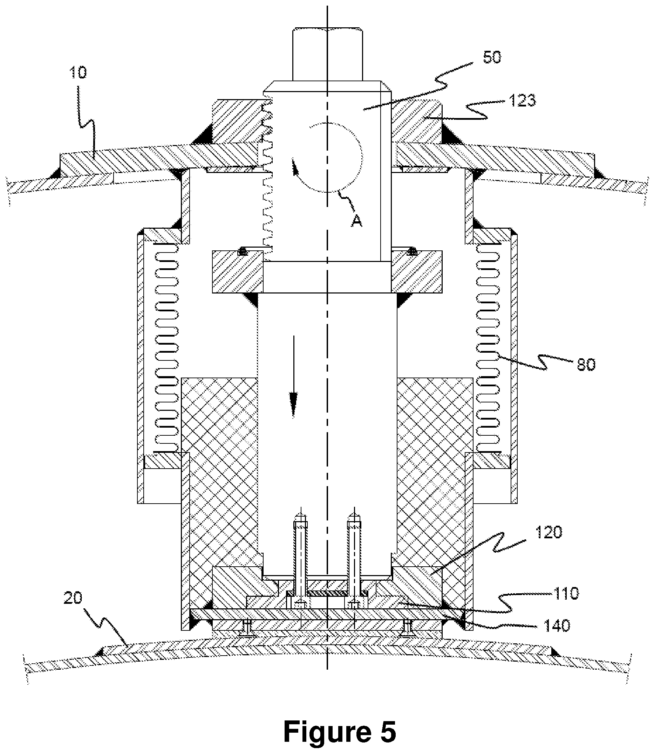

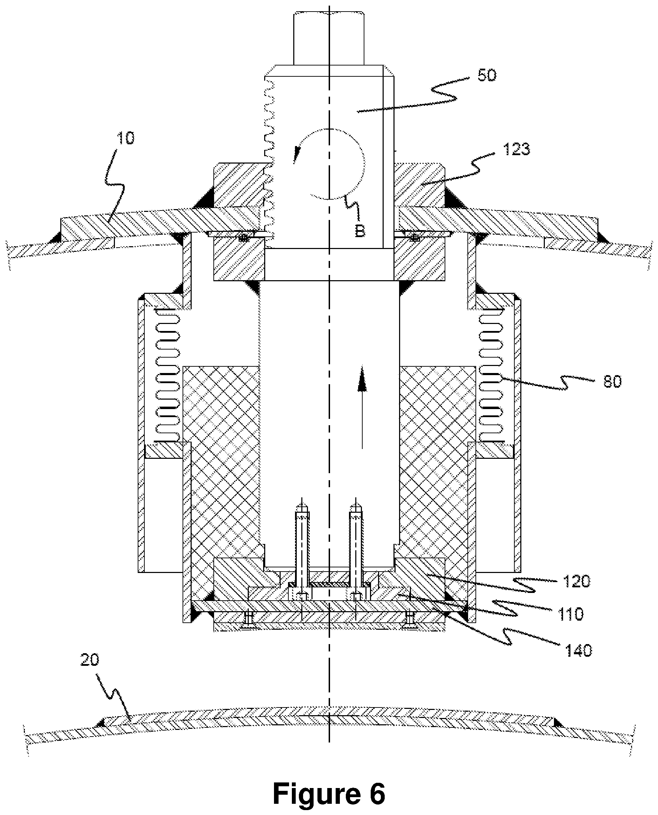

In Figures 5 and 6; the upward and downward movement of the support mechanism (1) is shown by turning the threaded rod (50) to direction A (A) and direction B (B).

## Claims

1. An annular space separating mechanism (1) which enables support to the inner tank of vacuum insulated cryogenic tanks, against transport loads arising from transportation systems such as sea route, land route and train during the transportation at horizontal position, and the support mechanism (1) separates after the tank that is transported to the work field is positioned vertically and inhibits the occurring of a thermal bridge between the inner tank and outer tank, comprising;
• a cover plate (140) which is configured to hold the vacuum and to contact the inner tank sheet metal during the transportation,
• a threaded rod (50) which is configured to turn the turning movement that is applied for separating the said support mechanism (1) from the tank into a bidirectional axial movement,
• a nut (123) which enables the vertical movement of the said threaded rod (50),
• yellow brass bearing (110), which enables the up and down movement of the said bearing member (120) by turning inside the bearing member (120) when the said threaded rod (50) turns,
• bearing member (120) which enables the bearing of said yellow brass bearing (110) and which enables contact to said cover plate (140),
• an expansion joint (80) which enables the compression / extension movement when the said threaded rod (50) turns.

2. A support mechanism (1) according to claim 1, and it is **characterized in that**; it comprises, at least two pieces of non-slippery surfaced part (130) which are contacted above and below the said cover plate (140) and reduces the friction constant under load.

3. A support mechanism (1) according to claim 1 or claim 2, and it is **characterized in that**; it comprises, at least one junction member (131) which enables the said non-slippery surfaced parts (130) to be connected to the said cover plate (140).

4. A support mechanism (1) according to claim 1, and it is **characterized in that**; it comprises, at least one connection screw (31) that enables the said yellow brass bearing (110) to be connected to the said threaded rod (50).

5. A support mechanism (1) according to claim 4, and it is **characterized in that**; it comprises, a shim (100) that enables the said connection screw (31) to distribute its loads.

6. A support mechanism (1) according to claim 1, and it is **characterized in that**; it comprises, an outer tank dabbling (10) that enables the load to be distributed to the outer tank and disables the vacuum of tank to leaked and an inner tank dabbling (20) that enables the load to be distributed to the inner tank.

7. A support mechanism (1) according to claim 1, and it is **characterized in that**; it comprises, a lower sleeve (60) which enables the said expansion joint (80) to be connected to the said cover plate (140).

8. A support mechanism (1) according to claim 6, and it is **characterized in that**; it comprises, an upper sleeve (90) which enables the said expansion joint (80) to be connected to the said outer tank dabbling (10).

9. A support mechanism (1) according to claim 1, and it is **characterized in that**; it comprises, a protective sleeve (70) which inhibits the isolation products to go in between of the said expansion joint (80) spirals.

10. A support mechanism (1) according to at least two of the claims 7, 8, 9 and it is **characterized in that**; it comprises, at least two plates (30) which enables the said expansion joint (80) to be connected to the said sleeves (60,70,90).

11. A support mechanism (1) according to claim 1, and it is **characterized in that**; it comprises, a stopper (40) which is located on the threaded rod (50) and inhibits the threaded rod (50) from turning too far when contacted to the outer tank dabbling (10) and inhibits the said expansion joint (80) be damaged with extreme compression.

12. A support mechanism (1) according to claim 1, and it is **characterized in that**; it comprises, the said expansion joint (80) has a structure made from flexible steel.

13. A support mechanism (1) according to claim 1, and it is **characterized in that**; it comprises, said yellow brass bearing (110) has a structure made from a copper alloy material.

14. A support mechanism (1) according to claim 1, and it is **characterized in that**; it comprises, said non-slippery surfaced parts (130) has PTFE coating.

15. A support mechanism (1) according to claim 1, and it is **characterized in that**; it comprises, said threaded rod (50) has a structure capable of a maximum of 70 mm turning movement.

## Patentansprüche

1. Ringförmiger Raumtrennungsmechanismus (1), der für den Innenbehälter von vakuumisolierten Kryogenbehältern Unterstützung gegen Transportlasten ermöglicht, die aus Transportsystemen wie über Meer, Land und per Zug während des Transports in einer horizontalen Position ermöglicht, und wobei sich der Unterstützungsmechanismus (1) trennt, nachdem der zum Arbeitsfeld transportierte Behälter vertikal positioniert ist, und das Entstehen einer Wärmebrücke zwischen dem Innenbehälter und dem Außenbehälter verhindert, umfassend:
• eine Abdeckungsplatte (140), die konfiguriert ist, um während des Transports das Vakuum zu halten und das Metallblech des Innenbehälters zu kontaktieren,
• eine Gewindestange (50), die konfiguriert ist, die Drehbewegung, die zum Trennen des Unterstützungsmechanismus (1) vom Behälter angewendet wird, in eine bidirektionale Axialbewegung zu drehen,
• eine Mutter (123), die die Vertikalbewegung der Gewindestange (50) ermöglicht,
• Messinglager (110), das die Auf- und Abbewegung des Lagerelements (120) durch Drehen im Lagerelement (120) ermöglicht, wenn sich die Gewindestange (50) dreht,
• Lagerelement (120), das das Lagern des Messinglagers (110) ermöglicht und die Kontaktierung der Abdeckungsplatte (140) ermöglicht,
• eine Expansionsverbindung (80), die die Kompressions-/Extensionsbewegung ermöglicht, wenn sich die Gewindestange (50) dreht.

2. Unterstützungsmechanismus (1) nach Anspruch 1, und **dadurch gekennzeichnet, dass** er mindestens zwei Stücke eines Teils mit nicht rutschender Oberfläche (130) umfasst, die über und unter der Abdeckungsplatte (140) kontaktiert werden und die Reibungskonstante unter Last reduzieren.

3. Unterstützungsmechanismus (1) nach Anspruch 1 oder Anspruch 2, und **dadurch gekennzeichnet, dass** er mindestens ein Verbindungselement (131) umfasst, das es den Teilen mit nicht rutschender Oberfläche (130) ermöglicht, mit der Abdeckungsplatte (140) verbunden zu werden.

4. Unterstützungsmechanismus (1) nach Anspruch 1, und **dadurch gekennzeichnet, dass** er mindestens eine Verbindungsschraube (31) umfasst, die es dem Messinglager (110) ermöglicht, mit der Gewindestange (50) verbunden zu werden.

5. Unterstützungsmechanismus (1) nach Anspruch 4, und **dadurch gekennzeichnet, dass** er eine Unterlegscheibe (100) umfasst, die es der Verbindungsschraube ermöglicht (31), ihre Lasten zu verteilen.

6. Unterstützungsmechanismus (1) nach Anspruch 1, und **dadurch gekennzeichnet, dass** er einen Außenbehälterschwimmer (10), der es der Last ermöglicht, an den Außenbehälter verteilt zu werden, und verhindert, dass das Vakuum des Behälters undicht wird, und einen Innenbehälterschwimmer (20), der es der Last ermöglicht, an den Innenbehälter verteilt zu werden, umfasst.

7. Unterstützungsmechanismus (1) nach Anspruch 1, und **dadurch gekennzeichnet, dass** er mindestens eine untere Manschette (60) umfasst, die es der Expansionsverbindung (80) ermöglicht, mit der Abdeckungsplatte (140) verbunden zu werden.

8. Unterstützungsmechanismus (1) nach Anspruch 6, und **dadurch gekennzeichnet, dass** er eine obere Manschette (90) umfasst, die es der Expansionsverbindung (80) ermöglicht, mit dem Außentankschwimmer (10) verbunden zu werden.

9. Unterstützungsmechanismus (1) nach Anspruch 1, und **dadurch gekennzeichnet, dass** er eine Schutzmanschette (70) umfasst, die verhindert, dass die Isolationsprodukte zwischen die Spiralen der Expansionsverbindung (80) gelangen.

10. Unterstützungsmechanismus (1) nach mindestens zwei der Ansprüche 7, 8, 9, und **dadurch gekennzeichnet, dass** er mindestens zwei Platten (30) umfasst, die es der Expansionsverbindung (80) ermöglichen, mit den Manschetten (60, 70, 90) verbunden zu werden.

11. Unterstützungsmechanismus (1) nach Anspruch 1, und **dadurch gekennzeichnet, dass** er einen Stopper (40) umfasst, der sich an der Gewindestange (50) befindet und verhindert, dass sich die Gewindestange (50) zu weit dreht, wenn sie vom Außenbehälterschwimmer (10) kontaktiert wird, und verhindert, dass die Expansionsverbindung (80) bei extremer Kompression beschädigt wird.

12. Unterstützungsmechanismus (1) nach Anspruch 1, und **dadurch gekennzeichnet, dass** er umfasst, dass die Expansionsverbindung (80) eine aus flexiblem Stahl hergestellte Struktur aufweist.

13. Unterstützungsmechanismus (1) nach Anspruch 1, und **dadurch gekennzeichnet, dass** er umfasst, dass das Messinglager (110) eine aus einem Kupferlegierungsmaterial hergestellte Struktur umfasst.

14. Unterstützungsmechanismus (1) nach Anspruch 1, und **dadurch gekennzeichnet, dass** er umfasst, dass die Teile mit nicht rutschender Oberfläche (130) eine PTFE-Beschichtung aufweisen.

15. Unterstützungsmechanismus (1) nach Anspruch 1, und **dadurch gekennzeichnet, dass** er umfasst, dass die Gewindestange (50) eine Struktur aufweist, die zu einer Drehbewegung von maximal 70 mm in der Lage ist.

## Revendications

1. Mécanisme de séparation d'espace annulaire (1) qui permet de supporter la cuve interne de cuves cryogéniques isolées sous vide, contre des charges de transport provenant de systèmes de transport comme les voies maritimes, terrestres et ferroviaires pendant le transport en position horizontale, et le mécanisme de support (1) se sépare après que la cuve qui est transportée vers le champ de travail est positionnée verticalement et empêche l'apparition d'un pont thermique entre la cuve interne et la cuve externe, comprenant ;
• une plaque couvercle (140) qui est configurée pour maintenir le vide et pour venir au contact d'une tôle de la cuve interne pendant le transport,
• une tige filetée (50) qui est configurée pour permettre la rotation du mouvement de rotation qui est appliqué pour séparer ledit mécanisme de support (1) de la cuve dans un mouvement axial bidirectionnel,
• un écrou (123) qui permet le déplacement vertical de ladite tige filetée (50),
• un palier en laiton jaune (110), qui permet le déplacement vers le haut et vers le bas dudit élément de palier (120) en tournant à l'intérieur de l'élément de palier (120) quand ladite tige filetée (50) tourne,
• un élément de palier (120) qui permet l'appui dudit palier en laiton jaune (110) et qui permet le contact avec ladite plaque couvercle (140),
• un joint d'expansion (80) qui permet le déplacement de compression / extension quand ladite tige filetée (50) tourne.

2. Mécanisme de support (1) selon la revendication 1, et **caractérisé en ce qu'**il comprend, au moins deux pièces d'un composant à surface anti-dérapante (130) qui sont connectées au-dessus et en dessous de ladite plaque couvercle (140) et réduisent le frottement constant sous charge.

3. Mécanisme support (1) selon la revendication 1 ou 2, et **caractérisé en ce qu'**il comprend au moins un élément de jonction (131) qui permet auxdits composants à surface anti-dérapante (130) d'être connectés à ladite plaque couvercle (140).

4. Mécanisme support (1) selon la revendication 1, et **caractérisé en ce qu'**il comprend au moins une vis de connexion (31) qui permet audit palier en laiton jaune (110) d'être connecté à ladite tige filetée (50).

5. Mécanisme support (1) selon la revendication 4, et **caractérisé en ce qu'**il comprend une cale (100) qui permet à ladite vis de connexion (31) de distribuer ses charges.

6. Mécanisme support (1) selon la revendication 1, et **caractérisé en ce qu'**il comprend une surface de cuve externe (10) qui permet à la charge d'être distribuée à la cuve externe et empêche le vide de la cuve de fuire et une surface de cuve interne (20) qui permet à la charge d'être distribuée vers la cuve interne.

7. Mécanisme support (1) selon la revendication 1, et **caractérisé en ce qu'**il comprend un manchon inférieur (60) qui permet audit joint d'expansion (80) d'être connecté à ladite plaque couvercle (140).

8. Mécanisme support (1) selon la revendication 6, et **caractérisé en ce qu'**il comprend un manchon supérieur (90) qui permet audit joint d'expansion (80) d'être connecté à ladite surface de cuve externe (10).

9. Mécanisme support (1) selon la revendication 1, et **caractérisé en ce qu'**il comprend un manchon protecteur (70) qui empêche les produits d'isolation de pénétrer entre les spirales dudit joint d'expansion (80).

10. Mécanisme support (1) selon au moins deux des revendications 7, 8, 9 et **caractérisé en ce qu'**il comprend au moins deux plaques (30) qui permettent audit joint d'expansion (80) d'être connecté auxdits manchons (60, 70, 90).

11. Mécanisme de support (1) selon la revendication 1, et **caractérisé en ce qu'**il comprend une butée (40) qui se situe sur la tige filetée (50) et empêche la tige filetée (50) de tourner trop loin quand elle est en contact avec la surface de cuve externe (10) et empêche ledit joint d'expansion (80) de s'endommager en raison d'une compression extrême.

12. Mécanisme de support (1) selon la revendication 1, et **caractérisé en ce qu'**il comprend, ledit joint d'expansion (80) a une structure faite en acier flexible.

13. Mécanisme de support (1) selon la revendication 1, et **caractérisé en ce qu'**il comprend, ledit palier en laiton jaune (110) a une structure faite d'un matériau d'alliage de cuivre.

14. Mécanisme de support (1) selon la revendication 1, et **caractérisé en ce qu'**il comprend, lesdits composants à surface anti-dérapante (130) ont un revêtement PTFE.

15. Mécanisme de support (1) selon la revendication 1, et **caractérisé en ce qu'**il comprend, ladite tige filetée (50) a une structure pouvant effectuer un mouvement de rotation de 70 mm maximum.
